# EUROPEAN PATENT SPECIFICATION

(11) **EP 2 855 613 B1**
(45) Date of publication and mention of the grant of the patent: **20.03.2019**
(21) Application number: 13727637.4
(22) Date of filing: 21.05.2013
(51) Int. Cl.: C09J 5/02, C08J 7/04, B29C 39/12

(54) **BONDING METHOD**
BONDINGVERFAHREN
PROCÉDÉ DE COLLAGE

(30) Priority: 01.06.2012 GB 201209879
(43) Date of publication of application: 08.04.2015
(73) Proprietor: Advanced Insulation Limited, Gloucester, GL2 4PA (GB)
(72) Inventor: SHEPHERD, Simon, Gloucester Gloucestershire GL13 9RL (GB)
(74) Representative: Sales, Robert Reginald
(86) International application number: PCT/GB2013/051323
(87) International publication number: WO 2013/178991

(56) References cited:
- US-A1- 2012 045 577
- DATABASE WPI Week 200469 Thomson Scientific, London, GB; AN 2004-703054 XP002716316, -& JP 2004 269742 A (NIPPON ZEON KK) 30 September 2004 (2004-09-30)

## Description

This invention concerns a method of bonding together two materials.

A number of low energy dissimilar materials are difficult to bond together, and particularly to securely bond together. It may though be desired to bond such materials together to obtain the characteristics of each material. One such situation is to provide joints or insulation for subsea equipment as may be used in hydrocarbon facilities. In such instances it is required to provide a bond which will be strong and long lasting in the harsh operating conditions experienced subsea. One such material is platinum cured silicone which when cured, generally only bonds well to other platinum cured silicones.

According to the present invention there is provided a method of bonding together two materials, the method comprising plasma treating an external surface of a first material, applying a primer to said external surface of the first material, and applying a second material in an uncured condition onto said external surface such that as the second material cures it bonds onto said external surface, the first material being any of: polypropylene, polyether ether ketone (PEEK), solid polyurethane, polyether, modified polyether, glass syntactic polyurethane, phenolic based syntactic insulation, or phenolic based GRP, and the second material comprising silicone based subsea insulation materials.

The primer may be silane based, may be a solution or mixture of polyorganosiloxanes, and may be a solution of siloxanes and silicone resins in a mixture of isoalkanes.

A dwell time may be provided after application of the primer and prior to application of the second material, and the dwell time may be between one and five hours.

The primer may be applied by brushing, wiping or blowing. In one embodiment the primer may be applied using a nozzle attached to a plasma gun so that primer is only applied where plasma treating has taken place.

The second material may be in two part form, and the two parts may be mixed immediately prior to application onto said external surface.

The plasma treating may be carried out using an air plasma generator. The plasma generator may be spaced at a distance of between 4 and 25mm from the first material during treatment, particularly at a distance of 6 to 16mm, and more particularly at a distance of 8 to 12mm.

The second material may be applied as a coating, or may be applied in a mould to provide a profiled outer layer to a component made of the first material.

The invention also provides a method for bonding together two materials for use in subsea conditions, the method being according to any of the preceding eight paragraphs.

An embodiment of the present invention will now be described by way of example only.

A silicone based insulation layer for subsea use is applied onto subsea structures such as pipeline components for transporting hydrocarbon fluids subsea. The components may be coated in polypropylene.

Firstly the exterior of the components is cleaned with an appropriate solvent such as acetone or IMS (industrial methylated spirit). An air plasma gun is set up above a belt conveyor and the components are placed on the conveyor such that the distance between the gun and the conveyor is at a required, distance which in this instance may be around 10mm. The speed of the belt conveyor is set to provide required plasma treatment, in this instance a speed of around 10m per minute is set.

The components are passed beneath the plasma gun and treated. A static or rotating plasma jet nozzle can be used to achieve the required treatment width. For instance a treatment width of 25mm may be applied, and subsequent treatment following movement of the components may be necessary to treat the whole external surface thereof.

Once the plasma treatment has been completed a siloxane primer is applied on the treated surface by wiping with a lint free cloth to provide a thin layer. The usual coverage may be between 40 and 60 mg/m2. In this instance the primer is a solution of siloxanes and silicone resins in a mixture of isoalkanes. This primer is a moisture cured material and needs to be left for at least an hour, and generally for less than 5 hours.

Once the primer has cured, platinum cured silicone based insulation material is applied uncured onto the components. The components may be located in a mould and the silicone insulation material is poured into the mould prior to curing. As the silicone insulation material cures it also bonds onto the treated components, by virtue of the primer layer on the plasma treated surface.

Using this method it has been found that the bonding strength between the silicone insulation material and the component is actually greater than the strength of the silicone material itself.

There is thus provided a method of bonding together low surface energy substances, to provide a very strong bond which is suitable for use in subsea conditions. The method can readily be carried out, with conditions being varied as required for particular situations and materials.

It is to be realised that a wide range of different conditions and components may be used in the method. For instance the plasma treated material can comprise any of a wide range of different materials including PEEK, solid pure polyurethane, polyether, modified polyether, glass syntactic polyurethane, thermotite deep foam, phenolic based syntactic insulation or phenolic based GRP.

The material applied onto the cured material can also be drawn from a range of materials, including a range of silicone based subsea insulation materials such as solid silicone or Novolastic.

Different conditions may be applied during the method. The plasma treatment may be carried out at a different distance and/or by a different way as required dependent on the material of the component.

The primer can be applied by a different method such as brushing or blowing. The blowing could be from a nozzle attached to the plasma generator to ensure that the primer is only applied where plasma treatment has taken place. Different siloxane primers can be used.

Rather than being applied in a mould, the uncured material could be provided just as a coating around a component.

## Claims

1. A method of bonding together two materials, the method comprising plasma treating an external surface of a first material, applying a primer to said external surface of the first material, and applying a second material in an uncured condition onto said external surface such that as the second material cures it bonds onto said external surface, the first material being any of: polypropylene, polyether ether ketone (PEEK), solid polyurethane, polyether, modified polyether, glass syntactic polyurethane, phenolic based syntactic insulation, or phenolic based GRP, and the second material comprising silicone based subsea insulation materials.

2. A method according to claim 1, in which the primer is silane based.

3. A method according to claim 1, in which the primer is a solution or mixture of polyorganosiloxanes.

4. A method according to claim 3, in which the primer is a solution of siloxanes and silicone resins in a mixture of isoalkanes.

5. A method according to any of the preceding claims, in which a dwell time is provided after application of the primer and prior to application of the second material.

6. A method according to claim 5, in which the dwell time is between one and five hours.

7. A method according to any of the preceding claims, in which the primer is applied by brushing, wiping or blowing.

8. A method according to any of claims 1 to 6, in which the primer is applied using a nozzle attached to a plasma gun so that primer is only applied where plasma treating has taken place.

9. A method according to any of the preceding claims, in which the second material is in two part form.

10. A method according to claim 9, in which the two parts are mixed immediately prior to application onto said external surface.

11. A method according to any of the preceding claims, in which the plasma treating is carried out using an air plasma generator.

12. A method according to claim 11, in which the plasma generator is spaced at a distance of between 4 and 25mm from the first material during treatment, and may be spaced at a distance of 6 and 16mm from the first material during treatment, and may be spaced at a distance of 8 and 12mm from the first material during treatment.

13. A method according to any of the preceding claims, in which the second material is applied as a coating.

14. A method according to any of claims 1 to 12, in which the second material is applied in a mould to provide a profiled outer layer to a component made of the first material.

15. A method for bonding together two materials for use in subsea conditions, the method being according to any of the preceding claims.

## Patentansprüche

1. Verfahren zum miteinander Bonden zweier Materialien, das Verfahren aufweisend Plasmabehandlung einer externen Oberfläche eines ersten Materials, Applizieren eines Primers auf die externe Oberfläche des ersten Materials, und Applizieren eines zweiten Materials im unausgehärteten Zustand an der externen Oberfläche derart, dass das zweite Material bei seinem Aushärten auf die externe Oberfläche gebondet wird, das erste Material ist eines von: Polypropylen, Polyetheretherketon (PEEK), festes Polyurethan, Polyether, modifiziertes Polyether, glassyntaktisches Polyurethan, phenolbasierte syntaktische Isolierung, oder phenolbasiertes GRP, und das zweite Material weist silikonbasiertes Unterwasser-Isolier-material auf.

2. Verfahren nach Anspruch 1, wobei der Primer silanbasiert ist.

3. Verfahren nach Anspruch 1, wobei der Primer eine Lösung oder Mischungen von Polyorganosiloxanen ist.

4. Verfahren nach Anspruch 3, wobei der Primer eine Lösung von Siloxanen und Silikonharzen in einer Mischung von Isoalkanen ist.

5. Verfahren nach einem der vorhergehenden Ansprüche , wobei eine Verweilzeit nach der Applikation des Primers und vor der Applikation des zweiten Materials vorgesehen ist.

6. Verfahren nach Anspruch 5, wobei die Verweilzeit zwischen einer und fünf Stunden liegt.

7. Verfahren nach einem der vorhergehenden Ansprüche, wobei der Primer mittels Aufbürsten, Aufwischen oder Aufblasen appliziert wird.

8. Verfahren nach einem der Ansprüche 1 bis 6, wobei der Primer durch Verwendung einer einer Plasmakanone zugeordneten Düse appliziert wird, so dass Primer nur dort appliziert wird wo Plasmabehandlung stattgefunden hat.

9. Verfahren nach einem der vorhergehenden Ansprüche, wobei das zweite Material in zweiteiliger Form ist.

10. Verfahren nach Anspruch 9, wobei die beiden Teile unmittelbar vor der Applikation auf die externe Oberfläche gemischt werden.

11. Verfahren nach einem der vorhergehenden Ansprüche, wobei die Plasmabehandlung unter Verwendung eines Luft-Plasma-generators durchgeführt wird.

12. Verfahren nach Anspruch 11, wobei der Plasmagenerator während der Behandlung in einem Abstand von zwischen 4 und 25mm vom ersten Material beabstandet ist, und während der Behandlung in einem Abstand von zwischen 6 und 16mm vom ersten Material beabstandet sein kann, und während der Behandlung in einem Abstand von zwischen 8 und 12mm vom ersten Material beabstandet sein kann.

13. Verfahren nach einem der vorhergehenden Ansprüche, wobei das zweite Material als Beschichtung appliziert wird.

14. Verfahren nach einem der Ansprüche 1 bis 12, wobei das zweite Material in eine Form appliziert wird um eine profilierte Außenschicht an eine aus dem ersten Material bestehende Komponente bereitzustellen.

15. Verfahren zum miteinander Bonden zweier Materialien zur Verwendung bei Unterwasser-Bedingungen, wobei das Verfahren nach einem der vorhergehenden Ansprüche durchgeführt wird.

## Revendications

1. Procédé de collage de deux matériaux, le procédé consistant à traiter au plasma une surface externe d'un premier matériau, à appliquer un apprêt sur ladite surface externe du premier matériau, et à appliquer un second matériau à l'état non durci sur ladite surface externe, de sorte que lorsque le deuxième matériau durcit, il se colle sur ladite surface externe, le premier matériau étant l'un quelconque des matériau suivant : du polypropylène, du polyétheréthercétone (PEEK), du polyuréthane solide, du polyéther, du polyéther modifié, du polyuréthane syntactique à charge de verre, un isolant syntactique à base phénolique, ou un GRP à base phénolique, et le second matériau comprenant des matériaux isolants sous-marins à base de silicone.

2. Procédé selon la revendication 1, dans lequel l'apprêt est à base de silane.

3. Procédé selon la revendication 1, dans lequel l'apprêt est une solution ou un mélange de polyorganosiloxanes.

4. Procédé selon la revendication 3, dans lequel l'apprêt est une solution de siloxanes et de résines de silicone dans un mélange d'isoalcanes.

5. Procédé selon l'une quelconque des revendications précédentes, dans lequel un temps de repos est prévu après l'application de l'apprêt et avant l'application du second matériau.

6. Procédé selon la revendication 5, dans lequel le temps de repos est compris entre une et cinq heures.

7. Procédé selon l'une quelconque des revendications précédentes, dans lequel l'apprêt est appliqué par brossage, essuyage ou soufflage.

8. Procédé selon l'une quelconque des revendications 1 à 6, dans lequel l'apprêt est appliqué à l'aide d'une buse fixée à un pistolet à plasma de sorte que l'apprêt ne soit appliqué que lorsqu'un traitement au plasma a eu lieu.

9. Procédé selon l'une quelconque des revendications précédentes, dans lequel le deuxième matériau se présente sous la forme d'un matériau à deux composants.

10. Procédé selon la revendication 9, dans lequel les deux composants sont mélangés immédiatement avant l'application sur ladite surface externe.

11. Procédé selon l'une quelconque des revendications précédentes, dans lequel le traitement au plasma est effectué en utilisant un générateur de plasma à air.

12. Procédé selon la revendication 11, dans lequel le générateur de plasma est espacé à une distance comprise entre 4 et 25 mm du premier matériau pendant le traitement, et peut être espacé à une distance comprise entre 6 et 16 mm du premier matériau pendant le traitement, et peuvent être espacés à une distance comprise entre 8 et 12 mm du premier matériau pendant le traitement.

13. Procédé selon l'une quelconque des revendications précédentes, dans lequel le second matériau est appliqué en tant que revêtement.

14. Procédé selon l'une quelconque des revendications 1 à 12, dans lequel le deuxième matériau est appliqué dans un moule pour fournir une couche extérieure profilée à un composant constitué du premier matériau.

15. Procédé de collage de deux matériaux destinés à être utilisés dans des conditions sous-marines, le procédé étant réalisé selon l'une des revendications précédentes.
